# EUROPEAN PATENT SPECIFICATION

(11) **EP 3 565 707 B1**
(45) Date of publication and mention of the grant of the patent: **01.03.2023**
(21) Application number: 17700106.2
(22) Date of filing: 03.01.2017
(51) Int. Cl.: B29C 64/165, B29C 64/153, B22F 3/105

(54) **A METHOD FOR PRINTING A 3D PRODUCT AND A 3D PRINTING DEVICE**
VERFAHREN ZUM DRUCKEN EINES DREIDIMENSIONALEN PRODUKTS UND 3D-DRUCKER
PROCÉDÉ D'IMPRESSION D'UN PRODUIT 3D ET DISPOSITIF D'IMPRESSION 3D

(43) Date of publication of application: 13.11.2019
(73) Proprietor: L3F Sweden AB, 545 31 Töreboda (SE)
(72) Inventor: EDVINSSON, Jerry, 545 93 Töreboda (SE)
(74) Representative: Valea AB
(86) International application number: PCT/EP2017/050082
(87) International publication number: WO 2018/127276

(56) References cited:
- DE-A1-102012 004 213
- US-A1- 2015 290 881

## Description

### TECHNICAL FIELD

A method for manufacturing one or more 3D products by additive manufacturing using a layer-by-layer technique and a 3D printing device for manufacturing one or more 3D products by additive manufacturing using a layer-by-layer technique.

### BACKGROUND

Additive manufacturing techniques comprises a process involving putting together or combining materials in order to manufacture 3D products from 3D modeling data, typically a computer-assisted design file, usually layer by layer, as opposed to subtractive manufacturing methodologies, such as traditional machining. These elementary volume elements, sometimes denoted "voxels", may be created and juxtaposed using a variety of different technical principles, for example by providing drops of photopolymerizable monomers by means of a print head, by selectively photopolymerizing with a source of UV light near the surface of a bath of monomer (stereolithography technique), or by melting polymer powder (selective laser melting (SLM) or selective laser sintering (SLS)) to mention a few.

Additive manufacturing techniques allow the geometry of 3D products to be defined with a great deal of flexibility, but raise a number of problems. In some fields, there is a need to be able to manufacture relatively large and geometrically complicated products and at a low cost. In other fields, care has been taken to manufacture small products even down to micro scale or nano scale. Independently on the field, the manufacturing time may have a significant impact on the costs. To reduce the manufacturing time efforts has been made to print continuous products shown substantially no distinct layers. Such manufacturing methods 3D enabling the printing of such products may have the advantage of not being restricted to position the 3D model in a specific way with respect to the printing volume. This is disclosed in the international patent application no. WO2006033621A1 assigned to L3F for example.

The US patent application no. US 2015/0290881 A1, VoxelJet AG, discloses a device for producing 3D models in a continuous manner. The device feeds the layer in a horizontal direction and applies individual layers spatially at an angle to the perpendicular of the horizontal. The angle is selected such that it is smaller than the specific angle of repose of the corresponding powder material. There are however reports of collisions between the print head and accumulated particulate material which may damage both the print head and the build space. Although the solution presented in the US patent application no. US 2015/0290881 A1 is directed towards solving this problem, it appears that there are room for improvements here.

DE 102012 004 213 A1 discloses two different manufacturing methods. In a first method, building layers are applied at an angle α to a forming surface which may be moved to allow continuous manufacturing of objects. A second method is a rotating procedure where the build layers are applied and bonded from the bottom up in a spiral shape pattern.

Further, traditional 3D printing devices using confined build spaces has the drawback of requiring a large amount of bulk material even when printing very small 3D products. This increases the building time, or manufacturing time, and increases the resetting time for the 3D printing device. Moreover, there is a relatively low efficiency in terms of recycling the abundant bulk material, i.e. the bulk material which has not been bonded into a 3D product. Just as a matter of example 20 % or more of the bulk material may be discarded due to that the bulk material is inappropriate to use again as bulk material. Parts of the bulk material may be damaged, or rendered less suitable, by the binding action for example.

### SUMMARY

It is an object of the disclosure to provide a method for manufacturing which is cost and time efficient. The object is at least partly achieved by means of providing a method according to claim 1. The object is at least partly achieved by means of a method for manufacturing of one or more 3D products by additive manufacturing using a layer-by-layer technique using a 3D printing device. The 3D printing device comprises at least one layer applying unit for depositing a plurality of material layers, a support arranged to receive the material layers, and a layer bonding unit for binding selected portions of the material layers together such that the one or more 3D products are formed. The method comprises the steps of depositing the material layers forming a bulk material volume. The material used in the material layers is evaluated to establish the angle of repose of the material. The at least one layer applying unit applies the material layers parallel to the support, the plurality of material layers being deposited such that at least one side of the bulk material volume (51, 51', 51") has an angle (α) with respect to the support (4) that is equal to, or lower, than the angle of repose for the material used for the plurality of material layers and the material layers are applied such that the bulk material volume comprises a base portion and a top portion, whereby the bulk material volume is formed such that the top portion is smaller than the base portion.

The method reduces the amount of material needed to be prepared for the 3D printing. Particulate material may need trying, filtering and temperature adjustments before being used for 3D printing. By reducing the amount of the required particulate material, energy, costs and manufacturing time can be saved. It further reduces the wear of the particulate material which after 3D printing has finished usually is recycled to a storage chamber in which it can be prepared for the next run. The method reduces the required total building time as fewer repetitions are required and less abundant material needs to be removed in order to release the printed 3D products(s).

The plurality of material layers is deposited such that at least one side of the bulk material volume has an angle with respect to the support that is equal to, or lower, than the angle of repose for the material used for the plurality of material layers. The bulk material volume will thus be tapering towards the top portion. The method considers the angle of repose for the specific material used and can compensate, or adapt, for this when applying the material layers. This removes the need for filling the whole void defined by the container as in some solutions of the prior art. It saves material, reduces the wear of the particulate material which may be recycled back for a second run after the 3D printing if completed.

The plurality of material layers may be deposited such that at least two sides of the bulk material volume has an angle with respect to the support that is equal to, or lower, than the angle of repose for the material of the plurality of material layers. The support may thus be provided with two supporting walls. However, this step also enables a lean manufacturing even if a support is fully contained e.g. by four supporting walls.

The support may comprise at least a first supporting wall. The first support wall, or two or more supporting walls, or all the supporting walls may be arranged at an angle to the support from 80-100 degrees, preferably about 90 degrees, even more preferably 90 degrees. The support may further comprise a second supporting wall, the first and the second supporting walls are preferably arranged opposite each other, and whereby the material layers are applied such that they are supported by at least the first and second supporting walls. This will provide a top portion having a ridge or crest. This is an efficient way of providing both volume while still maintaining efficiency.

The at least one layer applying unit may be arranged to apply the material layers in a direction perpendicular to the support. Applying the material layers perpendicular to the support, or the plane defined by the support, gives accurately applied layers. The material layers are also relatively easy to level out e.g. using a levelling unit.

The material used in the material layer is evaluated to establish the angle of repose of the material. A method step may thus be to first establish the angle of repose for the selected material. The measured angle of repose is thereafter entered in an algorithm functioning to form and/or find the suitable perimeter, or contour, of the bulk material volume. The angle of repose may optionally be downloaded from a data base, retrieved as a stored memory value e.g. from a storage device.

The method disclosed herein is especially advantageous for high capacity 3D printing devices. By high capacity 3D printing device is meant a 3D printing device having a printing volume of 1 m³ or more, such as 2 m³ or more, 3 m³ or more, 4 m³ or more, 5 m³ or more, 6 m³ or more. When using high capacity 3D printing devices abundant bulk material may become more difficult to handle due to the high amounts of abundant bulk material.

The plurality of material layers may be deposited such that at least one side of the bulk material volume has an angle with respect to the support that is smaller than 45 degrees.

The 3D printing volume may be partly formed in a confined space, the confined space being formed by the support and at least four supporting walls. As mentioned, the support maybe provided with supporting walls. The confined space may be provided with detachable supporting walls. Optionally one or more of the supporting walls are openable, enabling an operator to enter the confined space provided by the supporting walls. This provides flexibility in both the handling and the operation of the 3D printing device. In general terms, a method according to the disclosure may comprise the step of; removing or opening a supporting wall to access the support. When accessing the support an operator, or an automated process, may remove abundant bulk material and/or the printed 3D products.

The bulk material volume may be arranged outside of the confined space. A method according to the disclosure actually enables a printing volume to be extended beyond the confined space generally provided by the receptacle defined by the support and the supporting walls. As the method takes into account and can form a bulk material volume based on the angle of repose of the material used for the bulk material, the printing volume of a receptacle may be extended, as well as applied directly on a support inside of a receptacle. In the latter case, the top portion of the bulk material volume may be arranged inside of the confined space.

The layer applying unit may have an operational plane along which the layer applying unit reciprocates, and whereby the base portion of the bulk material volume is parallel with operational plane. The application of the material layer becomes very accurate when operating the layer applying unit in parallel with the support, and the plane defined by the support. Such plane is generally parallel with the X-Y plane of the 3D printing device.

The base portion may be applied such that the base portion of the bulk material volume is further away from the layer applying unit than the top portion of the bulk material volume.

3D model data may be treated by determining the extension of each 3D model in at least one of the X, Y, Z axes, and the angle of repose of the material used as bulk material to determine the outer contour of the bulk material volume. The method may comprise the step of determining the required contour, or extension of the bulk material volume with respect to a selected axis, in order to appropriately enable all the selected 3D products to be printed.

The present disclosure also relates to a 3D printing device for manufacturing of one or more 3D products by additive manufacturing using a layer-by-layer technique. The 3D printing device comprises a support onto which a plurality material layers may be positioned, at least one layer applying unit for depositing the plurality of material layers parallel with the support using a material having an angle of repose, and a layer bonding unit for binding selected portions of the plurality of material layers together such that the one or more 3D products are formed and an electronic control unit for governing at least the application of the plurality of material layers. The electronic control unit is adapted to govern the layer applying unit to deposit the plurality of material layers such that a bulk material volume is formed, and such that the bulk material volume has at least one side having an angle being equal or less than the angle of repose of the material used for forming the plurality of material layers, whereby the bulk material volume is formed such that the top portion is smaller than the base portion.

The device reduces the amount of material needed to be prepared for the 3D printing. Particulate material may need drying, filtering and temperature adjustments before being used for 3D printing. By reducing the amount of the required particulate material, energy, costs and manufacturing time can be saved. It further reduces the wear of the particulate material, which usually is recycled to a storage chamber in which it can be prepared for the next run after 3D printing is finished. The device reduces the required total building time as the repetition may not need to be performed along the full available length and less abundant material needs to be removed in order to release the printed 3D products(s).

The support may comprise at least one supporting wall, such as two or more supporting walls, such as three or four supporting walls.

According to an aspect, the disclosure also relates to a computer program comprising program code means for performing the steps according to the method disclosed herein, when the program is run on an electronic control unit of the 3D printing device as disclosed herein.

According to an aspect, the disclosure also relates to a computer readable medium carrying a computer program comprising program code means for performing the method disclosed herein when the program product is run on an electronic control unit of the 3D printing device as disclosed herein.

It should be noted that features disclosed with respect to the method may also be applicable on the device and features disclosed with respect to the device may also be applicable on the method.

This may concern products for direct use, such as building elements, ornamental mouldings, etc., as well as moulds and prototypes for the production of other products.

### BRIEF DESCRIPTION OF THE DRAWINGS

Non-limiting embodiments will be described in greater detail with reference to the accompanying figures in which;
figure 1 shows 3D models in the form of a doll illustrating an option to print similar 3D products having different resolution and size;
figure 2 a schematic view of a 3D printing device for additive manufacturing;
figure 3; a schematic view of a virtual 3D printing volume illustrating the available printing volume of a batch, and selected 3D models to be printed, with a view in perspective;
figure 4 shows the virtual 3D printing volume illustrating the available printing volume of a batch of figure 3 with a view along the X axis;
figure 5 shows a schematic process diagram of optional method steps and;
figure 6 shows a schematic process diagram of optional method steps.

### DETAILED DESCRIPTION OF PREFERRED EMBODIMENTS

The expression "additive manufacturing" is herein meant, according to international standard ASTM 2792-12, manufacturing techniques comprising a process involving putting together or combining materials in order to manufacture 3D products from 3D modeling data such as a computer-assisted design file e.g. CAD, usually layer by layer, as opposed to subtractive manufacturing methodologies, such as traditional machining. The additive manufacturing method disclosed herein is preferably a binder jetting method in which bonding agent, preferably liquid bonding agent, is selectively deposited onto a particulate material to join the particulate material. Other additive manufacturing methods which may benefit from the present disclosure are powder bed fusion, directed energy deposition, material extrusion, vat photopolymerization, material jetting or sheet lamination.

Embodiments of the present disclosure will be described herein e.g. with reference to wood powder as particulate material. It should be noted however that the method or device disclosed herein is not limited to wood powder as such.

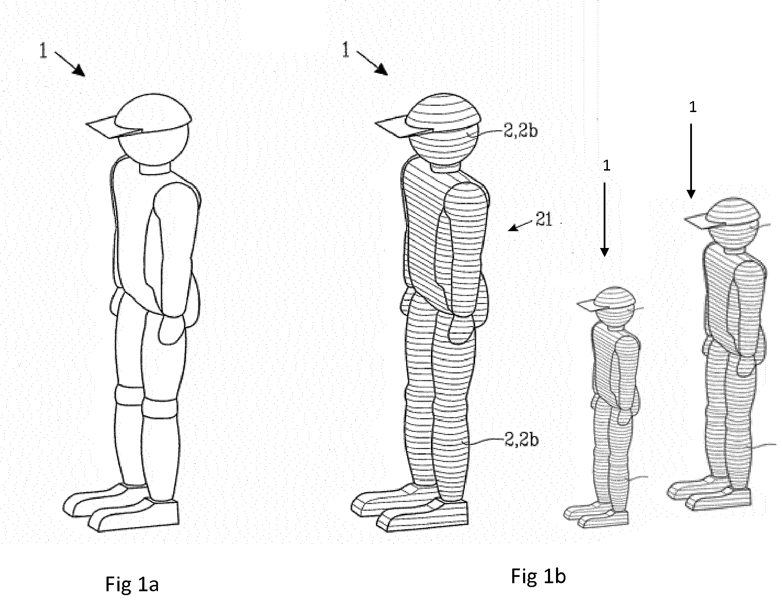

With reference to figure 1, the method according to the disclosure for manufacturing one or more 3D products in one batch by means of additive manufacturing using a layer-by-layer technique will be described in greater detail. The method includes that a layer of material, preferably particulate material, in this case wood powder, is applied onto a support, that binding agent is deposited onto the wood powder layer, whereupon an additional layer of wood powder is applied onto the preceding wood powder layer. Such application of wood powder and such deposition of binding agent are alternately repeated a desired number of times, so that wood powder of each layer and of adjacent layers is bonded into a continuous product by means of the binding agent.

Figure 1a illustrates an example of a model 1 in the form of a doll and Figure 1b schematically illustrates how the model 1 has been divided into horizontally oriented slices 2. Accordingly, the model exists as 3D modelling data, e.g. in a CAD file, in a computer program. The computer-based model 1 is then used as input data to a control unit of the device according to the disclosure in order to create a substantially similar real 3D product, in the example a doll, consisting of wood powder and binding agent. The basics of a suitable layer-by-layer technique are disclosed in the international patent application no. WO2006033621A1 assigned to L3F and will not be described in detail herein.

The layers 2b corresponding to the slices 2 of the model will be more difficult to distinguish in the real product 21 especially if thinner layers are used for building up the product. Hence, with thinner layers comes a higher resolution. As is evident from Figure 1b, the shape of the product is created by means of forming a plurality of layers, preferably more than 10 and usually more than 50, which can exhibit bonded areas of different sizes and different shapes, to overlap each other. Just as a matter of example, if a product which is 1 meter high is to be created from layers having a thickness of the order of 1 mm, approximately 1000 layers will be required.

The one or more 3D products are manufactured batch wise in the shown embodiment, the batch having a printing volume. The printing volume is the available volume which can be used to manufacture 3D products. In comparison, a bulk material volume is the actual volume of the material layers laid out in the printing volume. If 3D printing is performed on a support having supporting walls defining a volume, a bulk material volume can be 50 % of the printing volume if the defined volume is half full.

By means of the present disclosure, the manufacturing method for manufacturing the one or more 3D products can be manipulated such that the manufacturing method is more cost effective, faster and efficient in terms of usage of the material applied. Less bulk material needs to be discarded after printing. This is important as some material used a bulk material e.g. some plastics may need to be discarded or treated as toxic waste material. Bulk material may be very expensive and reducing the amount of bulk material which needs to be discarded is very advantageous.

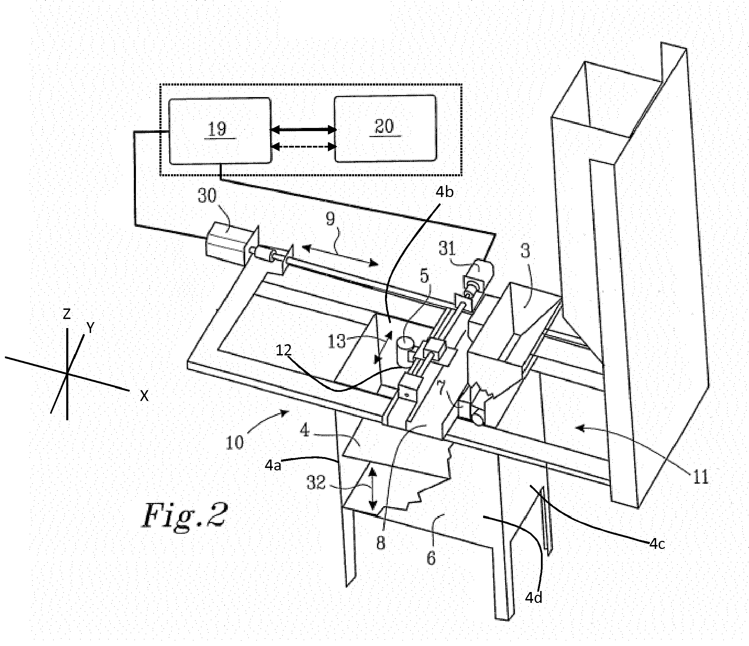

Figure 2 illustrate a 3D printing device for manufacturing one or more 3D products in one batch by means of additive manufacturing using a layer-by-layer technique, in this case a 3D product of wood powder. The device includes a layer applying unit 3 for feeding out particulate material, in the shown embodiment wood powder, forming a material layer onto a support 4. A layer bonding unit, in this case a depositing unit 5 for performing a binding action, e.g. by depositing binding agent, onto selected portions of the applied wood powder layer. The device according to embodiments herein may further comprise an optional reinforcing element application unit for application of reinforcing elements such as continuous reinforcing filaments e.g. nylon strings.

For the purpose of orientation, the height or vertical direction corresponds to a Z axis, the length, or longitudinal direction corresponds to a X axis, and the width, or transverse direction corresponds to a Y axis. The Z, X, Y axes are perpendicular to each other.

In the embodiment of the device according to the disclosure illustrated in Figure 2, the device comprises a support 4 in the shown embodiment formed by a receptacle 6 (which, for reasons of clarity, is shown cut off at the front). The support 4 is vertically adjustable along the Z axis and. It should be noted however that instead of having a vertically adjustable support, the support 4 may be fixed and the other units may be adjustable in a vertical direction so as to enable the formation of material layers and the performing of a binding action. Just as a matter of example, the layer applying unit and the layer binding unit and optionally a levelling unit if such is present may be vertically adjustable with respect to the support 4.

The support 4 may be provided with supporting walls 4a, 4b, 4c, 4d. In the shown embodiment, the support 4 is provided with four supporting walls defining the receptacle 6. It should be noted that a support 4 used herein may be provided with zero supportive walls, 1 or more, 2 or more, 3 or more, 4 or more supporting walls. Hence supporting walls may be used but are not necessary.

At the upper end of the receptacle 6, the layer applying unit 3 (in the following called the feeder 3), the depositing unit 5 and an optional unit 7 for levelling the layer and/or for removing excessive wood powder are arranged on a movable carriage 8. The feeder 3 and the layer levelling unit 7 are arranged for reciprocating motion along at least the X axis, i.e. in a direction parallel to the support 4, for example from a first end 10 to a second end 11 of the receptacle 6 and vice versa. The feeder 3 applies the material layer is a direction perpendicular to the plane defined by the support 4. The depositing unit 5 which exhibits at least one nozzle 12, preferably a plurality of individual nozzles 12, for deposition of binding agent, should be arranged for displacement along the two axes X, Y, preferably also in a plane parallel to the support 4, in order to enable deposition of binding agent onto desired areas. In principle, also a depositing means arranged for displacement along only one axis could be used, but this requires a depositing means which exhibits a large number of separate nozzles arranged along an axis being perpendicular in relation to the displacement axis of the depositing means. Other mechanisms for depositing binding agent may be used of course. Just as a matter of example, one or more robotic arms may be used such as one or more Cartesian robot arms. Different optional arrangements may be used to adapt the thickness of the bulk material layers such as a scraper and/or a rotating cylinder. An excessive bulk material removing unit may also be provided such as a suction and/or blowing device for transporting away excessive bulk material.

The levelling unit 7 may be operated to level out each applied layer, or to level out after a selected number or layers have been applied. Just as a matter of example and in general terms, the levelling unit may have one leveling cycle for each cycle of the layer applying unit. Optionally the levelling unit may have one cycle for every second cycle, or more, of the layer applying unit.

The 3D printing device further comprises an electronic control unit (ECU) 19 operatively connected with a display unit 20. The display unit 20 may be remotely positioned with respect to the 3D printing device and connected via wires or in a wireless manner e.g. via Wifi or via other communication protocols, or via a 3G, 4G or 5G network. The electronic control unit 19 may include a computer provided with a program for converting one or more 3D models into signals, said signals being used for controlling different components of the 3D printing device, such as the feeder 3, the depositing unit 5, the levelling unit 7 and the base plate 4. By means of transmitting these signals to motors 30, 31 being arranged for driving the mechanical components, the 3D products according to the disclosure can be produced in an automatic way. As mentioned above, the electronic control unit 19 and the display unit 20 may be arranged locally at the device or remotely thereto. A remote location is illustrated by the dashed box.

In the shown embodiment, binding agent is applied onto selected portions of a bulk material layer in order to form a specific geometry of the 3D product by means of distribution of binding agent. In the production, the portions where binding agent has been deposited will form the one or more 3D products, while remaining portions of the bulk material layers will remain unbonded, and thus not contribute to the finished one or more 3D products. However, before it is removed, the unbonded material can constitute a support for the 3D products during their manufacture.

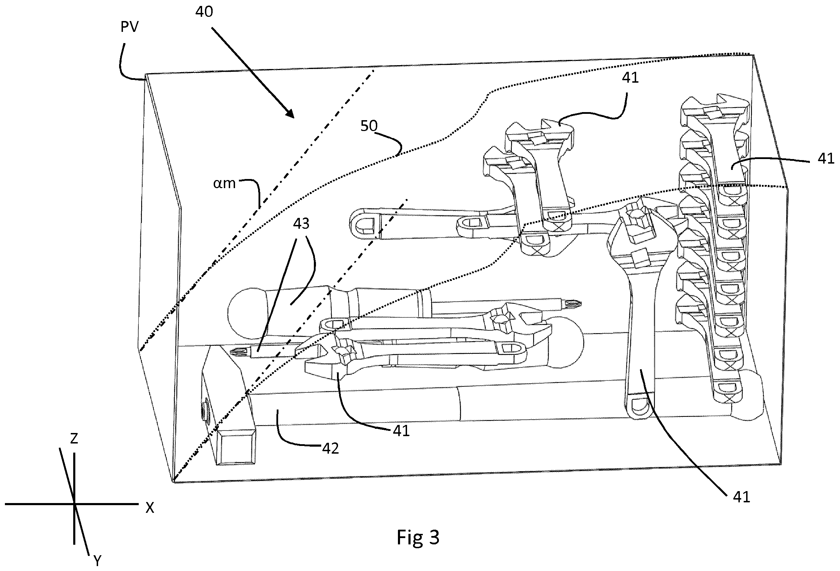

Figure 3 shows an illustration of how the 3D modelling data may be manipulated by a user and as represented on the display unit 20. Figure 3 shows a virtual image 40 of the batch representing a printing volume PV of the batch. A number of 3D models representing printable 3D products are visualized; a plurality of wrenches 41, a hammer 42 and a plurality of screw drivers 43. The 3D models are positioned at different positions within the printing volume PV. Via the display unit 20, a user may position and organize the 3D models such that a favorable manufacturing order is provided. Just as a matter of example, the 3D models may be dragged and dropped form a list of 3D models onto the virtual image 40.

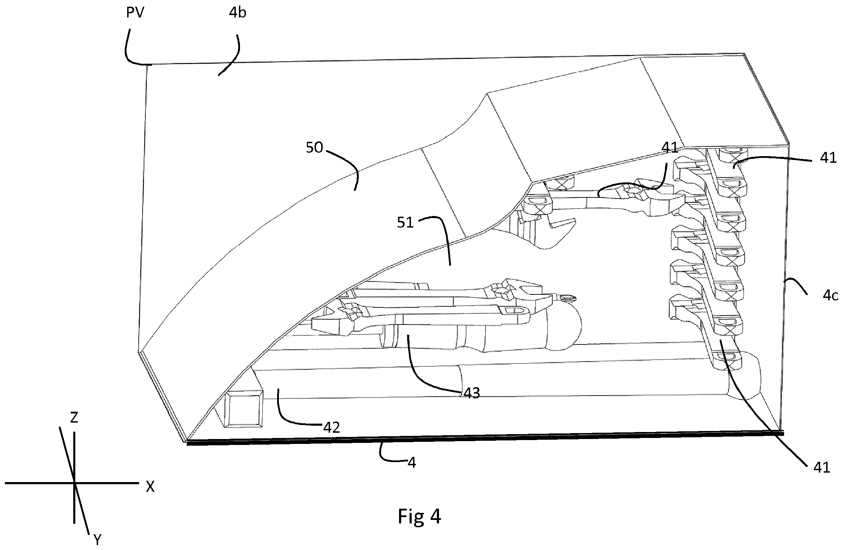

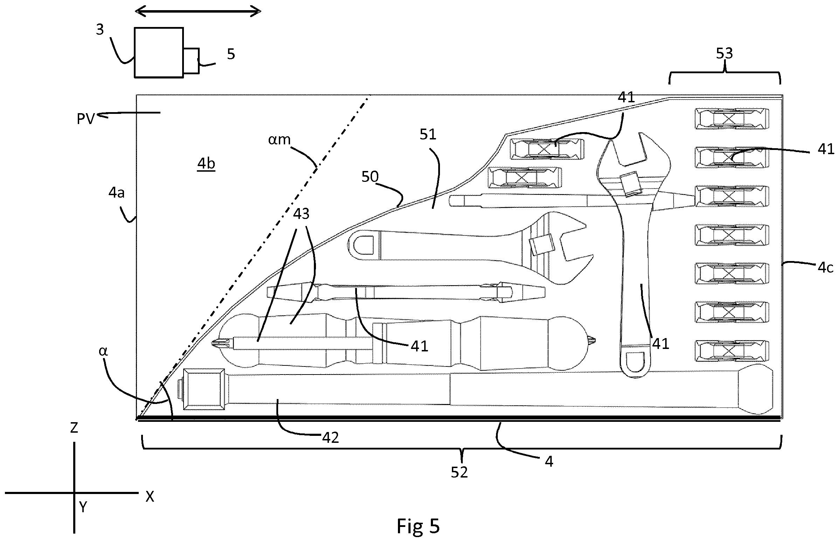

Figures 4 and 5 shows the actual printing volume PV represented in figure 3 after applying the method according to the present disclosure. Figures 4 and 5 show the actual 3D products in the form of a plurality of wrenches 41, a hammer 42 and a plurality of screw drivers 43. Figure 5 shows figure 4 but with a view along the Y axis. Figure 5 shows the support 4, a second supporting wall 4b, a third supporting wall 4c. The first and the fourth supporting walls 4a, 4d are not shown. Also shown in figure 5 is the perimeter 50 of the applied material layers forming a bulk material volume 51. As can be noticed, the material layers have not been applied across the whole area of the support 4 but having a continuously decreasing extension in the X-Y plane forming a bulk material volume 51 having a base portion 52 and a top portion 53, wherein the top portion 53 is smaller than the base portion 52. The top portion 53 has a smaller extension in the X-Y plane.

The material layers have been applied such that the bulk material volume has an angle α with respect to the support 4, or the plane defined by the support, that is equal to, or lower, than the angle of repose for the material used. In the shown embodiment, wood powder is used as particulate material. The angle of repose for the wood powder used in the present embodiment is 45 degrees. The method as disclosed herein may thus take into consideration the angle of repose of the specific material used.

Referring back to figure 3 and the virtual image 40 of the printing volume and the 3D models; the printing volume PV delimited by the angle of repose for the selected material αₘ may be visualized on the virtual image 40 such that an operator may position the 3D models in suitable configurations. The method may thus comprise a step in which an angle of repose for a selected material is entered into the control unit of the 3D printing device. Subsequently the delimited printing volume limited by the angle of repose may be visualized on a virtual image representing the printing volume. This enables an operator to efficiently position the 3D models before printing the 3D models into 3D products. Furthermore, the delimiting perimeter of the material layer desired to be formed by an operator, may be drawn directly on the virtual image 40 as is indicated by the perimeter 50 in figure 3. The operator may thus be aware of the angle of repose for the specific material used which limit the printing volume. The reciprocating feeder 3 and the layer binding unit 5 are also very schematically illustrated in figure 5.

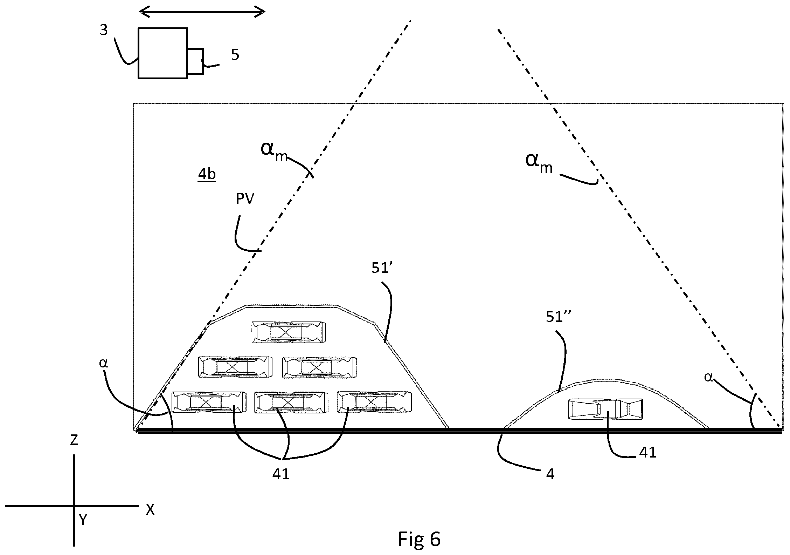

Figure 6 shows an embodiment in which the support 4 comprises only two opposing supporting walls equivalent positioned as the second and the fourth supporting walls 4b, 4d in figure 2. The fourth supporting wall 4d is not shown. The printing volume PV available on the support 4 is limited by the angle of repose α indicated in figure 6 by the dashed lines. A first and a second bulk material volume 51', 51" has been applied using a layer-by layer technique, and binding action has been repeatedly performed at selected portions of the applied material layers such that a number of 3D products has been formed. In the first bulk material volume six wrenches 41 are formed and in the second bulk material volume 51" only one wrench is formed. It should be noted of course that when 3D printing two separate bulk material volumes like in the shown embodiment, each bulk material volume is subjected to the limitations of the angle of repose. In figure 6 only the total available printing volume is shown using the dashed lines αₘ. The reciprocating feeder 3 and the layer binding unit 5 are also very schematically illustrated in figure 5.

The advantages of using the angle of repose as a limiting perimeter are many. In the shown embodiment, two of the supporting walls have been removed. This enables the 3D printing device to use less material as smaller batches may be run. The method even enables the second bulk material volume 51" to be removed from the support 4 before the first bulk material volume 51' is finished. Hence giving a very effective work flow as well as permitting smaller batches to be produces using a high capacity 3D printing device. By high capacity 3D printing devices is hereby meant 3D printing devices having a printing volume of 1m³ or more. A 3D printing device having a printing volume of 1m³ or more thus has the capacity to print a 3D product having a volume of 1m³ or more. Just as a matter of example, the printing volume PV of a 3D printing device disclosed herein, such as the 3D printing device in the shown embodiment, may be 1 m³ or more, such as 2 m³ or more, 3 m³ or more, 4 m³ or more, 5 m³ or more, 6 m³ or more. It has been found that a method according to the disclosure is especially useful when 3D printing large batches, or when using high capacity 3D printing devices. It should be noted that the method may be equally important on small capacity 3D printing devices as some 3D printing devices used very expensive bulk material.

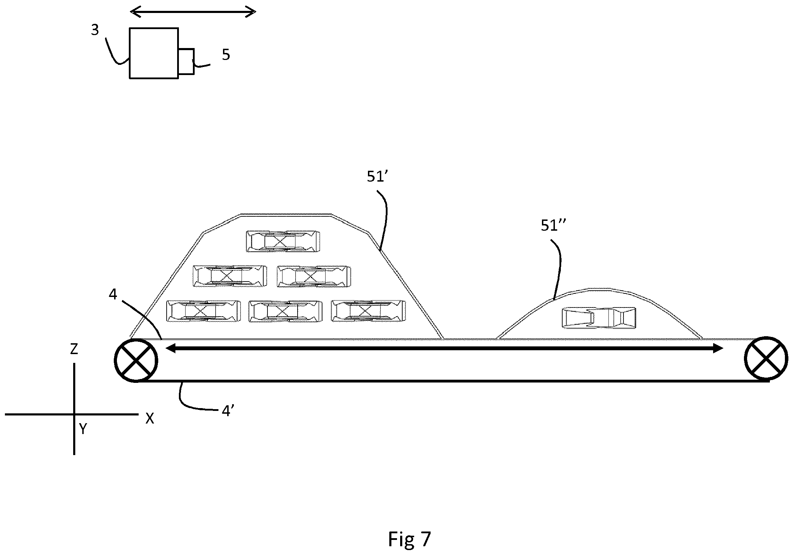

Figure 7 shows a support 4 displaceable along the X or Y axis, i.e. along an axis in the horizontal plane. The support 4 is in the shown embodiment formed by a conveyor 4'. The reciprocating feeder 3 and the layer binding unit 5 are also very schematically illustrated in figure 7. In the shown embodiment, the first and the second bulk material volumes 51', 51" may be printed separately. Just for the purpose of orientation, the first bulk material volume 51' is to the left in figure 7 while the second bulk material volume 51" is to the right in figure 7. Once the first bulk material volume 51' is finished, the first bulk material volume 51' can be displaced along the X axis using the conveyor belt 4' and the printing of the 3D products of the second bulk material volume 51" can be initiated. In this manner, the 3D printing device can continuously print 3D products. As is noticed, the support 4 of figure 7 does not need supporting walls at all as long as the angle of repose has been considered in both the Y and the X axis. However, it is preferred that at least a first and a second opposing supporting wall is arranged to support the material layers such that the angle of repose only needs to be considered with respect to one axis, in this case the X axis.

Optionally, the first and the second bulk material volumes 51', 51" can be printed in a single batch. Once the second bulk material volume 51" is finished, the first bulk material volume 51' has about 33 % left to build. The 3D products printed in the second bulk material volume 51" may at this stage be released as the first bulk material volume 51" continue to build. This method thus also useful for 3D printing devices not having a mobile support, i.e. a displaceable support in the X or Y axis but only displaceable in the vertical direction.

Non-limiting examples will be disclosed below to illustrate optional steps in the method disclosed herein.

### Example 1

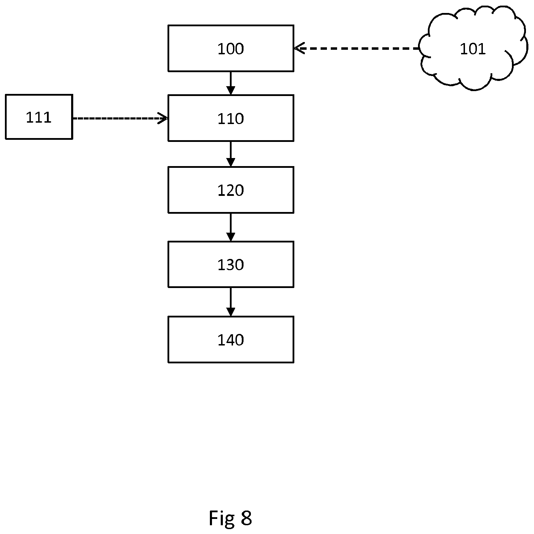

Figure 8 shows a schematic process diagram illustrating an embodiment of the method according to the present disclosure. In this case, the device uses wood powder as bulk material and a hot melt adhesive as binding agent. The wood powder has an average particle size of 0.05 mm.

At step 100, a computer comprising a display unit, forming a part of an electronic control unit for manufacturing one or more 3D products by means of additive manufacturing using a layer-by-layer technique, is loaded with 3D modelling data for one or more 3D products, preferably a plurality of 3D products. In this case the 3D models are a hammer, a screw driver and a wrench. The 3D models may be downloaded from the internet e.g. via a cloud based server 101 or retrieved from a local storage device such as a hard drive on the computer. The 3D models may be positioned in the virtual 3D printing volume so as to determine when and in which order they should be manufactured. The easiest way to do this is to separate the three 3D products with respect to the Z axis (as shown in figure 4 for example) so that they are not arranged in the same plane defined by the Y-X axes.

At step 110, the angle of repose of the material which is going to be used as bulk material for the 3D printing is set. Step 110 is thus a data input step. In the illustrated embodiment, the angle of repose of the wood powder used is 45 degrees. In an optional step 111, the angle of repose of a selected material is measured. The 3D printing device may thus be provided with a calibration step, or measuring step, for determining and/or setting the angle of repose for the material used as bulk material. The amount and position of supporting walls is further defined unless this is a fixed parameter. This data input step may optionally precede the previous step 100.

At step 120, an available printing volume is defined by taking the input data into account. In this case, the available printing volume PV is defined by taking the angle of repose for the selected material into account. As an option in this step, the 3D model data may be treated by determining the extension of each 3D model in at least one of the X, Y, Z axes, preferably two or in all three axes, and the angle of repose of the material used as bulk material to determine the required outer contour of the bulk material volume. A safety distance may be added such as 10-100 mm for example, to safe guard that the 3D products will be safely covered and provided with sufficient material in order to form a complete 3D product.

At step 130, the required printing volume is defined by taking the input data into account. In this step, the 3D models, and the slices, which the 3D models represent are adjusted such that the extension of the material layer applied by the layer applying unit does not exceed the angle of repose with respect to the previous applied material layer. A bulk material volume will thus be formed such that a top portion is smaller than a base portion of the bulk material volume.

At step 140, the 3D models and the partitioned printing volume will be converted to 3D printing device readable data and forwarded to the 3D printing device as instructions to the different units. The data formed by the above input and terms to the 3D models may optionally be sent to the device electronic control unit which converts the input data to readable data containing instructions for the device. The device is now ready for manufacturing the selected 3D products.

By the term "angle of repose" as used herein is meant steepest angle of descent to which particulate material are piled without slumping.

### Bulk material

Bulk material is herein meant any material which may be used to form a 3D product by performing a binding action on the bulk material. Preferably the bulk material is a particulate material. The particulate material may be inert particulate material or reactant particulate material. A material layer may comprise one or more layers of bulk material.

Examples of inert particulate material may be selected from metals, inert polymers, inert salts, inert organic materials or inert ceramics, or combinations thereof.

Examples of **metals** include aluminium, steel, titanium, iron, alloys, or the like.

Examples of **inert polymers** include poly (methyl methacrylate), polystyrene, polyamide, polyester, a latex, polyethylene, polypropylene, polyurethane, polyvinyl chloride, polyvinyl acetate, cross-linked polyvinyl pyrrolidone, hydrophilic polyurethane, poly (ethylene terephthalate), thermoplastic urethane, styrene-acrylonitrile copolymer, thermoplastic polyolefin, an epoxy-based polymer, polyether, polyamine, a polyacid, a polycarbonate, a vinyl polymer, an aromatic polyamide, a diene polymer, poly (phenylene oxide), polysiloxane, polynorbornene, polyisoprene, a polyphenylene ether, styrene-butadiene block copolymer, acrylonitrile-butadiene-styrene, high impact polystyrene and copolymers thereof.

Examples of **inert salts** include sodium carbonate, sodium bicarbonate, sodium borate, sodium chloride, sodium sulfate, potassium sulfate, potassium chloride, magnesium sulfate, magnesium chloride, potassium aluminum sulfate, sodium polyphosphate, sodium acetate, hydrous calcium sulphate, calcium phosphate, sodium silicate, and hydrated lime (Ca (OH) 2).

Examples of **inert organic materials** include starch, cellulose fibers, wood powder, wax, resin, bone, protein, carbohydrates, sugars, textile fibers and dietary fibers.

Examples of **inert ceramics** include gypsum, limestone, clay, aluminum oxide, aluminum silicate, calcium silicate, silicon dioxide, titanium dioxide, glass, iron oxide, zinc oxide, magnetite, aluminum hydroxide, magnesium oxide, calcium phosphate, zirconium silicate, silicon carbide, boron nitride, boron carbide and borosilicate.

### Wood powder

A preferred bulk material may be wood powder. The expression wood powder as used herein refers to a powder made of a wood material. Different tree species, soft wood or hard wood, such as pine, spruce, birch, larch or others, and different forms of wood originating from branches, trunks, stumps, roots of trees, or in the form of wood waste, such as recycled wood waste, can be used as a starting material for producing the wood powder. Examples of suitable wood materials are wood chips originating from machining of homogenous wood, such as sawdust, cutter shavings, or the like. Wood powder will thus include the same substances as the initial wood does such as lignin, pectin and ash.

In comparison to wood powder made from wood material, cellulose or cellulose fibers may be derived from wood material but have been treated in a number of process steps, and thus represents another kind of material. A cellulose fiber is thus a more refined and elegant material and in some aspects lack substances that wood powder would include. Just as a matter of example, cellulose fibers may be natural occurring fibers such as cotton fibers or linen fibers, manufactured fibers from e.g. plants which have been processed into pulp. Examples of plants are crops, wood, leaves or the like. Rayon or viscose fibers are examples of manufactured cellulose fibers.

The use of a wood powder as a bulk material may be advantageous since wood powder can be produced at a low cost, from an easily accessible raw material (wood). The usage of wood powder may even imply that material considered as waste material becomes useful. Furthermore, wood powder is biodegradable and can be used to manufacture biodegradable and thereby environmentally friendly 3D products.

### Size of particulate matter

The particles of the particulate material such as powder e.g. wood powder, can exhibit different shapes and sizes. The particle size can be from relatively small, so that the powder obtains a flour-like consistency, to relatively large, implying that the individual particles can be distinguished at a visual inspection. Advantageously, the particles of a given powder are substantially of the same size in order to obtain a uniform quality of the final product.

For many products, a particle size in the size interval 0.001-5 mm, and preferably of the order of 0.01-2 mm, can be used when forming the material layers. If, for example, a particle size of 1 mm is chosen, it can be ensured by means of filtration, sometimes referred to as sieve analysis, that the particles in one and the same powder has a size which does not exceed, for example, 1.2 mm, and a size which does not fall below, for example, 0.8 mm.

The size of the individual particulate matter may be as small as atom size, or nano size. Just as a matter of example, atom by atom material layers may be formed using molecular beam epitaxy (MBE) which allows for the vertical stacking of individual atomic layers i.e. the Z-axis, in combination with scanning probe lithography, which uses an extremely sharp tip to move and place individual atoms in a lateral direction, i.e. the X- and Y-axes. A Laser particle sizer Analysette 22 NanoTec, by Fritsch, may be used. Such device generally has measuring range of 0.01 - 2100 µm. Standard ISO 13320. Following theory Fraunhofer, Mie. Fraunhofer theory for larger particles when their exact optical parameters are unknown and Mie theory for the smallest particles with known optical parameters. It is possible to select both theories in a FRITSCH MaS control software.

Other particle size measurements methods which may be used to determine a particle size are sieve analysis, sedimentation, image particle analysis, microscope counting to mention a few.

### Binding actions

Suitable binding actions may be to add binding agent, to add one or more chemical reactants to form a binding agent on or in the material layer, heat treatment to e.g. melt portions of the material layer such that the material layer is bonded. Other binding actions may be radiation treatment, electromagnetic radiation, electron beam, light treatment or combinations thereof.

### Binding agent

Different types of binding agents may be used. The useful binding agents have in common that they are capable of bonding together the powder, or particles, in the bulk material so that a desired strength of the 3D product can be achieved. The binding agent can be water-based, but the binding agent is suitably water resistant. Whether the binding agent should be water resistant or not, however, depends on the 3D product which is to be manufactured and possible post-treatments of the product. One suitable binding agent is wood glue, but also a hot melt adhesive, for example a plastic-based one, which is heated during application could be used. Most wood glues which are present on the market have the advantages of being relatively cost efficient and easy to handle, environmentally friendly and particularly suited for bonding wood materials. Non-limiting examples of glue are Polyvinyl acetate (PVA) glue, animal glue such as hide glue, Polyurethane glue, Urea-formaldehyde resin adhesives, Resorcinol-formaldehyde resin glue, Cyanoacrylate glue preferably with additive for delayed hardening time.

The binding agent can also be applied as two or more individual components which together form a binding agent, e.g. via a chemical reaction between the two or more components such as epoxy resin and hardener. The binding agent may be formed on the material layer itself or before being applied onto the material layer.

The concentration or dilution of the binding agent (water content if a water-based binding agent is concerned) can be varied. Thereby, also the moisture content of the used bulk material has a certain importance, since the total amount of moisture originating from the powder and the binding agent has to be capable of at least wetting the material to the desired extent in order to enable bonding of selected portions of the bulk material layers. The moisture content of the bulk material should also be adapted in order to give the bulk material properties making the bulk material easy to work when being laid out in layers. The binding agent may be applied such that each layer is saturated with binding agent, or such that the binding agent sinks into the preceding material layer, or even into preceding material layers. In the latter case, binding agent is applied such that the material layer is bonded together but not saturated. Instead binding agent may be applied onto a subsequently applied material layer but yet still penetrate into the preceding one or more material layers. Binding agent may penetrate into two or more such as 2-6 previous material layers. This will provide a 3D product which is continuous in terms of that no, or substantially no, material layers may identified should the 3D product be cut open and inspected.

### Additives

In addition to the particulate material constituting the base of the material such as wood powder, and, accordingly, the base of the finished 3D product, it is also possible to add small quantities of other substances/materials to the binding agent and/or to the material layer in order to obtain specific properties of the 3D product formed from the particulate material. The particulate material, such as wood powder, should form at least 50 %, 51 % or more, 60 % or more, 70 % or more, 80 % or more, 90 % or more, 95 % or more of the material layer. Preferably, different substances can be added to the binding agent and/or the material layer, e.g. as a mixture with the particulate material.

One example of such an additive is colouring agent, colouring pigment, or the like, in order to give the end product a certain colour. By means of choosing different colours of the binding agent for different layers of the product, the finished product can obtain different colours on different visible surfaces.

Other additives are reinforcing elements such as reinforcing strings, e.g. nylon strings.

One or more flame retardants may further be added. Flame retardants are generally divided into three groups; minerals, Organohalogen compounds and Organophosphorus compounds. Examples of minerals are; magnesium hydroxide (MDH), aluminium hydroxide (ATH), red phosphorus, boron compounds, huntite and hydromagnesite, and various hydrates. Examples of organohalogen compounds are organochlorines such as chlorendic acid derivatives and chlorinated paraffins; polymeric brominated compounds such as brominated polystyrenes, brominated carbonate oligomers (BCOs), brominated epoxy oligomers (BEOs), tetrabromophthalic anyhydride, tetrabromobisphenol A (TBBPA) and hexabromocyclododecane (HBCD), organobromines such as decabromodiphenyl ether (decaBDE), decabromodiphenyl ethane (a replacement for decaBDE).

A flame retardant synergist may further be added to improve the efficiency of the flame retardant, such as antimony trioxide, pentoxide and sodium antimonate.

Examples of organophosphorus compounds are phosphonates such as dimethyl methylphosphonate (DMMP); and phosphinates such as aluminium diethyl phosphinate, triphenyl phosphate (TPP), resorcinol bis(diphenylphosphate) (RDP), bisphenol A diphenyl phosphate (BADP), and tricresyl phosphate (TCP).

Flame retardants comprising phosphorus and a halogen may also be used such as and chlorinated organophosphates such as tris(1,3-dichloro-2-propyl)phosphate (chlorinated tris or TDCPP) and tetrakis(2-chlorethyl)dichloroisopentyldiphosphate (V6), tris(2,3-dibromopropyl) phosphate (brominated tris).

### Test method for angle of repose

In case of doubt, the C1444-00 Standard test method for measuring the angle of repose of free-flowing mold powders may be used, alternatively a more recent version. In case of conflicting tests results, the lowest angle of repose should be used. Just as a matter of example, the angle of repose for some materials are listed here; with material (condition) and angle of repose (degrees): Ashes 40°, Wood powder 45°, Bran 30-45°, Chalk 45°, Clay (dry lump) 25-40°, Sand (dry) 34°.

## Claims

1. A method for manufacturing of one or more 3D products by additive manufacturing using a layer-by-layer technique using a 3D printing device (1), said 3D printing device (1) comprising at least one layer applying unit (3) for depositing a plurality of material layers, a support (4) arranged to receive said material layers, and a layer bonding unit (5) for binding selected portions of said material layers together such that said one or more 3D products are formed,
said method comprising the steps of;
- depositing said material layers forming a bulk material volume (51, 51', 51");
whereby said material used in said material layers is evaluated to establish the angle of repose of said material, said at least one layer applying unit (3) applies said material layers parallel to said support (4), said plurality of material layers being deposited such that at least one side of the bulk material volume (51, 51', 51") has an angle (α) with respect to said support (4) that is equal to, or lower, than the angle of repose for the material used for said plurality of material layers and said material layers being applied such that said bulk material volume (51, 51', 51") comprises a base portion (52) and a top portion (53),
and
whereby said bulk material volume (51, 51', 51") is formed such that said top portion (53) is smaller than said base portion (52).

2. The method according to claim 1, whereby said plurality of material layers are deposited such that at least two sides of the bulk material volume have an angle (α) with respect to said support (4) that is equal to, or lower, than the angle of repose for the material of the plurality of material layers.

3. The method according to any one of the preceding claims, whereby said support (4) comprises at least a first supporting wall (4a, 4b, 4c, 4d), said first supporting wall (4a, 4b, 4c, 4d) preferably being arranged at an angle to said support (4) from 80-100 degrees, said support (4) optionally further comprising a second supporting wall (4a, 4b, 4c, 4d), said first and said second supporting walls (4b, 4d) preferably being arranged opposite each other; and whereby said material layers are applied such that they are supported by at least said first and second supporting walls (4b, 4d).

4. The method according to any one of the preceding claims, whereby the printing volume (PV) is 1 m³ or more, such as 2 m³ or more, 3 m³ or more, 4 m³ or more, 5 m³ or more, 6 m³ or more.

5. The method according to claim 1 or 2, whereby said plurality of material layers are deposited such that at least one side of the bulk material volume (51, 51', 51") has an angle (α) with respect to said support (4) that is equal or smaller than 45 degrees.

6. The method according to any one of the preceding claims, whereby said 3D printing volume (PV) is partly formed by a confined space, said confined space being formed by said support (4) and at least four supporting walls (4a, 4b, 4c, 4d).

7. The method according to claim 6, whereby said top portion (53) of said bulk material volume (51, 51', 51") is arranged outside of said confined space when finished 3D printing or whereby said top portion (53) of said bulk material volume (51, 51') is arranged inside of said confined space when finished 3D printing.

8. The method according to any one of the preceding claims, whereby said layer applying unit (3) has an operational plane (X, Y) along which said layer applying unit (3) reciprocates, and whereby said base portion (52) of said bulk material volume (51, 51', 51") is parallel with said operational plane (X, Y).

9. The method according to any one of the preceding claims, wherein the angle of repose of the material used in the material layers is entered in an algorithm functioning to form and/or find a suitable perimeter, or contour, of the bulk material volume (51, 51', 51").

10. A 3D printing device (1) for manufacturing of one or more 3D products by additive manufacturing using a layer-by-layer technique, said 3D printing device (1) comprising a support (4) onto which a plurality material layers may be positioned, at least one layer applying unit (3) for depositing said plurality of material layers, and a layer bonding unit (5) for binding selected portions of said plurality of material layers together such that said one or more 3D products are formed, and an electronic control unit (ECU) for governing at least the application of said plurality of material layers, wherein said electronic control unit (ECU) is adapted to govern said layer applying unit (3) to deposit said plurality of material layers parallel with said support (4), using a material having an angle of repose, such that a bulk material volume (51, 51', 51") is formed, and such that said bulk material volume (51, 51', 51") has at least one side having an angle (α) being equal or less than the angle of repose of said material used for forming said plurality of material layers, whereby said bulk material volume (51, 51', 51") is formed such that said top portion (53) is smaller than said base portion (52).

11. The 3D printing device according to claim 10, wherein said support comprises at least two supporting walls, such as three or four supporting walls (4a, 4b, 4c, 4d).

12. A computer program comprising program code means for performing the steps according to any one of the claims 1-9, when the program is run on an electronic control unit of the 3D printing device according to any one of claims 10-11.

13. A computer readable medium carrying a computer program comprising program code means for performing the steps according to any one of the claims 1-9 when the program product is run on an electronic control unit of the 3D printing device according to any one of claims 10-11.

## Patentansprüche

1. Verfahren zum Fertigen eines oder mehrerer 3D-Produkte durch ein additives Fertigungsverfahren unter Verwendung einer Schicht-für-Schicht-Technik unter Verwendung einer 3D-Druckvorrichtung (1), die 3D-Druckvorrichtung (1) umfassend mindestens eine Schichtaufbringungseinheit (3) zum Auftragen einer Vielzahl von Materialschichten, eine Stütze (4), die angeordnet ist, um die Materialschichten aufzunehmen, und eine Schichtbindungseinheit (5) zum Binden ausgewählter Abschnitte der Materialschichten miteinander, derart, dass das eine oder die mehreren 3D-Produkte ausgebildet werden,
das Verfahren umfassend die folgenden Schritte;
- Auftragen der Materialschichten, die ein Vollmaterialvolumen (51, 51', 51") ausbilden; wodurch das Material, das in den Materialschichten verwendet wird, bewertet wird, um den Ruhewinkel des Materials festzulegen, wobei die mindestens eine Schichtaufbringungseinheit (3) die Materialschichten parallel zu der Stütze (4) aufbringt, wobei die Vielzahl von Materialschichten aufgetragen wird, derart, dass mindestens eine Seite des Vollmaterialvolumens (51, 51', 51") einen Winkel (α) hinsichtlich der Stütze (4) aufweist, der gleich oder kleiner als der Ruhewinkel für das verwendete Material für die Vielzahl von Materialschichten ist, und die Materialschichten aufgebracht werden, derart, dass das Vollmaterialvolumen (51, 51', 51") einen Basisabschnitt (52) und einen oberen Abschnitt (53) umfasst, und
wodurch das Vollmaterialvolumen (51, 51', 51") ausgebildet wird, derart, dass der obere Abschnitt (53) kleiner als der Basisabschnitt (52) ist.

2. Verfahren nach Anspruch 1, wobei die Vielzahl von Materialschichten aufgetragen wird, derart, dass mindestens zwei Seiten des Vollmaterialvolumens einen Winkel (α) hinsichtlich der Stütze (4) aufweisen, der gleich oder kleiner als der ist Ruhewinkel für das Material der Vielzahl von Materialschichten ist.

3. Verfahren nach einem der vorstehenden Ansprüche, wobei die Stütze (4) mindestens eine erste Stützwand (4a, 4b, 4c, 4d) umfasst, wobei die erste Stützwand (4a, 4b, 4c, 4d) vorzugsweise in einem Winkel zu der Stütze (4) von 80-100 Grad angeordnet ist, der Träger (4) optional ferner umfassend eine zweite Stützwand (4a, 4b, 4c, 4d), wobei die erste und die zweite Stützwand (4b, 4d) vorzugsweise gegenüberliegend zueinander angeordnet sind; und wobei die Materialschichten aufgebracht werden, derart, dass sie durch mindestens die erste und die zweite Stützwand (4b, 4d) gestützt werden.

4. Verfahren nach einem der vorstehenden Ansprüche, wobei das Druckvolumen (PV) 1 m³ oder mehr, wie etwa 2 m³ oder mehr, 3 m³ oder mehr, 4 m³ oder mehr, 5 m³ oder mehr, 6 m³ oder mehr beträgt.

5. Verfahren nach Anspruch 1 oder 2, wobei die Vielzahl von Materialschichten aufgetragen wird, derart, dass mindestens eine Seite des Vollmaterialvolumens (51, 51', 51") einen Winkel (α) hinsichtlich der Stütze (4) aufweist, der gleich oder kleiner als 45 Grad ist.

6. Verfahren nach einem der vorstehenden Ansprüche, wobei das 3D-Druckvolumen (PV) teilweise durch einen begrenzten Raum ausgebildet wird, wobei der begrenzte Raum durch die Stütze (4) und mindestens vier Stützwände (4a, 4b, 4c, 4d) ausgebildet wird.

7. Verfahren nach Anspruch 6, wobei der obere Abschnitt (53) des Vollmaterialvolumens (51, 51', 51") außerhalb des begrenzten Raums angeordnet ist, wenn der 3D-Druck abgeschlossen ist, oder wobei der obere Abschnitt (53) des Vollmaterialvolumens (51, 51') innerhalb des begrenzten Raums angeordnet ist, wenn der 3D-Druck abgeschlossen ist.

8. Verfahren nach einem der vorstehenden Ansprüche, wobei die Schichtaufbringungseinheit (3) eine Betriebsebene (X, Y) aufweist, entlang der sich die Schichtaufbringungseinheit (3) hin- und herbewegt, und wodurch der Basisabschnitt (52) des Vollmaterialvolumens (51, 51', 51") parallel zu der Betriebsebene (X, Y) ist.

9. Verfahren nach einem der vorstehenden Ansprüche, wobei der Ruhewinkel des Materials, das in den Materialschichten verwendet wird in einen Algorithmus eingegeben wird, der dazu dient, einen geeigneten Umfang oder eine geeignete Kontur des Vollmaterialvolumen (51, 51', 51") auszubilden und/oder zu finden.

10. 3D-Druckvorrichtung (1) zum Fertigen eines oder mehrerer 3D-Produkte durch ein additives Fertigungsverfahren unter Verwendung einer Schicht-für-Schicht-Technik, die 3D-Druckvorrichtung (1) umfassend eine Stütze (4), auf der eine Vielzahl von Materialschichten positioniert werden kann, mindestens eine Schichtaufbringungseinheit (3) zum Auftragen der Vielzahl von Materialschichten und eine Schichtbindungseinheit (5) zum Binden ausgewählter Abschnitte der Vielzahl von Materialschichten miteinander, derart, dass das eine oder die mehreren 3D-Produkte ausgebildet werden, und eine elektronische Steuereinheit (ECU) zum Regeln mindestens des Aufbringens der Vielzahl von Materialschichten, wobei die elektronische Steuereinheit (ECU) angepasst ist, die Schichtaufbringungseinheit (3) zu regeln, um die Vielzahl von Materialschichten parallel zu dem Träger (4) aufzutragen, unter Verwendung eines Materials, das einen Ruhewinkel aufweist, derart, dass ein Vollmaterialvolumen (51, 51', 51") ausgebildet wird, und derart, dass das Vollmaterialvolumen (51, 51', 51") mindestens eine Seite aufweist, die einen Winkel (α) aufweist, der gleich oder kleiner als der Ruhewinkel des Materials ist, das zum Ausbilden der Vielzahl von Schichten verwendet wird, wodurch das Vollmaterialvolumen (51, 51', 51") ausgebildet wird, derart, dass der obere Abschnitt (53) kleiner als der Basisabschnitt (52) ist.

11. 3D-Druckvorrichtung nach Anspruch 10, wobei die Stütze mindestens zwei Stützwände umfasst, wie etwa drei oder vier Stützwände (4a, 4b, 4c, 4d).

12. Computerprogramm, umfassend Programmcodemittel zum Durchführen der Schritte nach einem der Ansprüche 1 bis 9, wenn das Programm auf einer elektronischen Steuereinheit der 3D-Druckvorrichtung nach einem der Ansprüche 10 bis 11 ausgeführt wird.

13. Computerlesbares Medium, das ein Computerprogramm trägt, umfassend Programmcodemittel zum Durchführen der Schritte nach einem der Ansprüche 1 bis 9, wenn das Programmprodukt auf einer elektronischen Steuereinheit der 3D-Druckvorrichtung nach einem der Ansprüche 10 bis 11 ausgeführt wird.

## Revendications

1. Procédé de fabrication d'un ou plusieurs produits 3D par fabrication additive à l'aide d'une technique couche par couche à l'aide d'un dispositif d'impression 3D (1), ledit dispositif d'impression 3D (1) comprenant au moins une unité d'application de couche (3) pour déposer une pluralité de couches de matériau, un support (4) disposé pour recevoir lesdites couches de matériau et une unité de liaison de couches (5) pour lier des parties sélectionnées desdites couches de matériau ensemble de sorte que lesdits un ou plusieurs produits 3D sont formés,
ledit procédé comprenant les étapes consistant à ;
- déposer lesdites couches de matériau formant un volume de matériau en vrac (51, 51', 51") ; par lequel
ledit matériau utilisé dans lesdites couches de matériau est évalué pour établir l'angle de talus dudit matériau, ladite au moins une unité d'application de couche (3) applique lesdites couches de matériau parallèlement audit support (4), ladite pluralité de couches de matériau étant déposée de telle sorte qu'au moins un côté du volume de matériau en vrac (51, 51', 51") présente un angle (α) par rapport audit support (4) qui est égal ou inférieur à l'angle de talus du matériau utilisé pour ladite pluralité de couches de matériau et lesdites couches de matériau étant appliquées de telle sorte que ledit volume de matériau en vrac (51, 51', 51") comprend une partie de base (52) et une partie supérieure (53), et
par lequel ledit volume de matériau en vrac (51, 51', 51") est formé de telle sorte que ladite partie supérieure (53) est plus petite que ladite partie de base (52).

2. Procédé selon la revendication 1, par lequel ladite pluralité de couches de matériau est déposée de telle sorte qu'au moins deux côtés du volume de matériau en vrac ont un angle (α) par rapport audit support (4) qui est égal ou inférieur à l'angle de talus du matériau de la pluralité de couches de matériau.

3. Procédé selon l'une quelconque des revendications précédentes, par lequel ledit support (4) comprend au moins une première paroi de support (4a, 4b, 4c, 4d), ladite première paroi de support (4a, 4b, 4c, 4d) étant de préférence disposée à un angle par rapport audit support (4) de 80 à 100 degrés, ledit support (4) comprenant en outre éventuellement une seconde paroi de support (4a, 4b, 4c, 4d), lesdites première et seconde parois de support (4b, 4d) de préférence étant disposées l'une en face de l'autre ; et par lequel lesdites couches de matériau sont appliquées de telle sorte qu'elles sont supportées par au moins lesdites première et seconde parois de support (4b, 4d).

4. Procédé selon l'une quelconque des revendications précédentes, par lequel le volume d'impression (PV) est de 1 m³ ou plus, tel que 2 m³ ou plus, 3 m³ ou plus, 4 m³ ou plus, 5 m³ ou plus, 6 m³ ou plus.

5. Procédé selon la revendication 1 ou 2, par lequel ladite pluralité de couches de matériau est déposée de telle sorte qu'au moins un côté du volume de matériau en vrac (51, 51', 51") présente un angle (α) par rapport audit support (4) qui est égal ou inférieur à 45 degrés.

6. Procédé selon l'une quelconque des revendications précédentes, par lequel ledit volume d'impression 3D (PV) est en partie formé par un espace confiné, ledit espace confiné étant formé par ledit support (4) et au moins quatre parois de support (4a, 4b, 4c, 4d).

7. Procédé selon la revendication 6, par lequel ladite partie supérieure (53) dudit volume de matériau en vrac (51, 51', 51") est disposée à l'extérieur dudit espace confiné une fois l'impression 3D terminée ou par lequel ladite partie supérieure (53) dudit volume de matériau (51, 51') est disposée à l'intérieur dudit espace confiné une fois l'impression 3D terminée.

8. Procédé selon l'une quelconque des revendications précédentes, par lequel ladite unité d'application de couche (3) a un plan opérationnel (X, Y) le long duquel ladite unité d'application de couche (3) effectue un mouvement de va-et-vient, et par lequel ladite partie de base (52) dudit volume de matériau en vrac (51, 51', 51") est parallèle audit plan opérationnel (X, Y).

9. Procédé selon l'une quelconque des revendications précédentes, dans lequel l'angle de talus du matériau utilisé dans les couches de matériau est entré dans un algorithme fonctionnant pour former et/ou trouver un périmètre, ou contour, approprié du volume de matériau en vrac (51, 51', 51").

10. Dispositif d'impression 3D (1) pour la fabrication d'un ou plusieurs produits 3D par fabrication additive à l'aide d'une technique couche par couche, ledit dispositif d'impression 3D (1) comprenant un support (4) sur lequel une pluralité de couches de matériau peuvent être positionnées, au moins une unité d'application de couche (3) pour déposer ladite pluralité de couches de matériau, et une unité de liaison de couches (5) pour lier des parties sélectionnées de ladite pluralité de couches de matériau ensemble de sorte que lesdits un ou plusieurs produits 3D sont formés, et une unité de commande électronique (ECU) pour régir au moins l'application de ladite pluralité de couches de matériau, dans lequel
ladite unité de commande électronique (ECU) est adaptée pour diriger ladite unité d'application de couche (3) afin de déposer ladite pluralité de couches de matériau parallèlement audit support (4), à l'aide d'un matériau ayant un angle de talus, de telle sorte qu'un volume de matériau en vrac (51, 51', 51") est formé, et de telle sorte que ledit volume de matériau en vrac (51, 51', 51") présente au moins un côté dont l'angle (α) est inférieur ou égal à l'angle de talus dudit matériau utilisé pour former ladite pluralité de couches de matériau, par lequel ledit volume de matériau en vrac (51, 51', 51") est formé de telle sorte que ladite partie supérieure (53) est plus petite que ladite partie de base (52).

11. Dispositif d'impression 3D selon la revendication 10, dans lequel ledit support comprend au moins deux parois de support, telles que trois ou quatre parois de support (4a, 4b, 4c, 4d).

12. Programme informatique comprenant un moyen de code de programme pour effectuer les étapes selon l'une quelconque des revendications 1 à 9, lorsque le programme est exécuté sur une unité de commande électronique du dispositif d'impression 3D selon l'une quelconque des revendications 10 à 11.

13. Support lisible par ordinateur transportant un programme informatique comprenant un moyen de code de programme pour effectuer les étapes selon l'une quelconque des revendications 1 à 9 lorsque le produit programme est exécuté sur une unité de commande électronique du dispositif d'impression 3D selon l'une quelconque des revendications 10 à 11.
